# EUROPEAN PATENT APPLICATION

(11) **EP 2 175 315 A1**
(43) Date of publication of application: **14.04.2010**
(21) Application number: 07792409.0
(22) Date of filing: 10.08.2007
(51) Int. Cl.: G02F 1/365, H04B 10/02, H04B 10/18, H04J 14/08

(54) **METHOD AND DEVICE FOR SHAPING OPTICAL WAVEFORM**

(71) Applicant: Fujitsu Limited, Kawasaki-shi, Kanagawa 211-8588 (JP)
(72) Inventor: FUTAMI, Fumio, Kawasaki-shi Kanagawa 211-8588 (JP); WATANABE, Shigeki, Kawasaki-shi Kanagawa 211-8588 (JP)
(74) Representative: HOFFMANN EITLE
(86) International application number: PCT/JP2007/065764
(87) International publication number: WO 2009/022396

(57) **Abstract**

In an optical waveform shaping apparatus according to the present invention, a WDM signal light is amplified by a first optical amplifier, and thereafter, is input to a first nonlinear medium; a spectrum of the signal light of each wavelength is expanded due to SPM in the first nonlinear medium to thereby separate a signal component and a noise component; and for each spectrum, only a signal component on a short wavelength side is collectively extracted by an optical filter. Then, an output light of the optical filter is amplified by a second optical amplifier, and thereafter, is input to a second nonlinear medium, and the wavelength of each signal light is collectively shifted to a longer wavelength side due to self-frequency shifting in the second nonlinear medium, to thereby return the wavelength of each signal light to that for when each signal light contained in the WDM signal light has been input. As a result, the signal light of each wavelength contained in the WDM signal light can be collectively waveform shaped, and also, the wavelength of each signal light after waveform shaped can be precisely the same as that before waveform shaped.

## Description

### FIELD

The present invention relates to a method and an apparatus, for waveform shaping a plurality of signal lights of different wavelengths contained in a wavelength division multiplexed (WDM) signal light.

### BACKGROUND

In a commercially operated WDM optical fiber communication system which compensates for an optical loss of an optical fiber transmission path by using rare-earth element doped optical amplifiers including an erbium doped fiber amplifier (EDFA), which are characterized of performing collectively direct-amplification on a multiple wavelength signal light, a binary intensity modulation signal is mainly used. This is because the WDM optical fiber communication system can be realized with a simple configuration in which the light is directly modulated with an electric signal in a transmitter and the intensity of signal light is detected in a receiver, and accordingly, because of such simplicity, high reliability can be ensured.

On the other hand, focusing on transmission characteristics, in the WDM system, the signal light quality is deteriorated as the WDM signal light is propagated through the optical fiber transmission path, due to cross-talk among different wavelengths, a nonlinear effect in the optical fiber, chromatic dispersion, accumulation of amplified spontaneous emissions (ASE) noise, and an interaction thereof, so that a transmission distance of the WDM signal light is restricted. As technologies for overcoming such restriction, there are a regeneration repeating technology and a multi-value modulating technology, for example.

The regeneration repeating technology is realized by utilizing a signal regenerator having a configuration in which the receiver and the transmitter is connected to each other. To be specific, the WDM signal light is separated for each one wavelength, and thereafter, the signal light of each wavelength is converted into an electric signal in the receiver of the signal regenerator so that a signal waveform is electrically regenerated. Then, in accordance with the regenerated signal waveform, an optical signal is generated in the transmitter, and a WDM signal light obtained by wavelength multiplexing the signal light of each wavelength is output. Such a regeneration repeating technology can largely improve the signal quality, but has disadvantages in that the signal regenerator needs to be used for each wavelength. Therefore, in the WDM system, such a regeneration repeating technology as described above is not practically used, due to the cost, size, power consumption and the like of the signal regenerator.

On the other hand, the multi-value modulating technology is a technology which applies a multi-value modulating format inclusive of phase modulation to a signal light, and is now actively researched. In such a multi-value modulating technology, comparing with the signal light in the conventional binary intensity modulating format, although a propagation distance of the signal light can be extended, there is a problem in that configurations of transmitter and receiver are complicated, sizes thereof are enlarged and the like.
Based on the above technologies, nowadays, the advent of a signal regenerating technology capable of collectively processing a WDM signal light without separating the WDM signal light for each wavelength is largely expected. Particularly, in view of practical application, as one of requirements for an optical waveform shaping technology, it is demanded that the wavelength of each signal light is not changed before or after optical waveform shaped. This is because, if the wavelength of each signal light is changed, the chromatic dispersion to which each signal light is subjected in the optical fiber transmission path is different to each other, and accordingly, designing of WDM system becomes significantly hard.

Up to the present, there has been proposed some technologies each of which waveform shapes the WDM signal light while maintaining the WDM signal light in an optical state. Patent Document 1 described below discloses a technology for realizing the waveform shaping of the WDM signal light by utilizing a soliton effect. This conventional technology is a waveform shaping method which focuses on a feature that a signal light waveform self-converges into a soliton type (sech² function) in a nonlinear fiber. As the nonlinear fiber, there is utilized the one having dispersion characteristics in that the signal light of each wavelength is subjected to self-phase modulation (SPM) for soliton forming but four-wave mixing (FWM) between the signal light of each wavelength is not generated. For the signal light of each channel input to such a nonlinear fiber, intensity fluctuation thereof is converted into fluctuation of spectrum width by the SPM. However, since an incident peak power thereof is near a fundamental soliton power, a center portion of spectrum converges into a shape near a fundamental soliton. Then, the WDM signal light output from the nonlinear fiber is fed to a demultixing filter and a multiplexing filter each of which transmission band is matched with the center wavelength of the signal light of each channel, and the fluctuation of spectrum width of each channel is cut off so that the original intensity fluctuation of each signal light is removed.

Further, Patent Document 2 described below discloses a technology for realizing the waveform shaping of the WDM signal light by utilizing chirping due to the SPM. To be specific, the WDM signal light which has been amplified to have a required power is fed to a normal dispersion fiber so that the chirping due to the SPM is generated, and a component of small chirping is removed by an optical band-stop filter of which blocking band is matched with the center wavelength of each signal light so that the intensity fluctuation in the vicinity of a peak and a bottom of signal light pulse or the accumulated noise is removed.

### CITATION LIST

Patent Document 1: Japanese Laid-open Patent Publication No. 2002-372730
Patent Document 2: Japanese Patent No. 3662463

### SUMMARY

### TECHNICAL PROBLEMS

However, in the above described conventional waveform shaping method utilizing the soliton effect, the noise of "1" level of the signal light can be suppressed in principle, but there is a problem in that the noise of "0" level may not be suppressed. Further, in the above described conventional waveform shaping method utilizing the chirping due to the SPM, the noises of both "0" and "1" levels can be suppressed, but there is a problem in that, since the chirping remains in the signal light of each channel after waveform shaped, unless the chirping is compensated for, it is difficult to maintain the high signal quality of each channel in the transmission of WDM signal light after waveform shaped.

The present invention has been accomplished in view of the above problems, and has an object to provide a waveform shaping method and a waveform shaping apparatus, capable of collectively shaping a waveform of signal light of each wavelength without separating a WDM signal light for each wavelength, and also, capable of precisely holding the wavelength of each signal light before or after waveform shaped.

### SOLUTION TO PROBLEMS

In order to achieve the above object, according to the present invention, an optical waveform shaping method of collectively waveform shaping a plurality of signal lights of different wavelengths contained in a WDM signal light includes: a spectrum expanding process of inputting the WDM signal light to a first nonlinear medium to collectively expand a spectrum of signal light of each wavelength, and separating a signal component and a noise component which are contained in each signal light, into different spectrum regions; an optical filtering process of collectively extracting a signal component in a spectrum region on a shorter wavelength side of a center wavelength of each signal light for when each signal light contained in the WDM signal light has been input to the first nonlinear medium, for each signal light of which spectrum is expanded in the spectrum expanding process, and collectively removing the signal component and the noise component in the other spectrum region; and a wavelength shifting process of inputting the signal component of each signal light, which has been extracted in the optical filtering process, to a second nonlinear medium, collectively shifting, to a longer wavelength side, a wavelength of the signal component of each signal light by self-frequency shifting generated in the second nonlinear medium, and substantially matching a center wavelength of each signal component with the center wavelength of each signal light for when each signal light contained in the WDM signal light has been input to the first nonlinear medium.

Further, according to the present invention, an optical waveform shaping apparatus for collectively waveform shaping a plurality of signal lights of different wavelengths contained in a WDM signal light includes: a spectrum expanding section configured to have a first nonlinear medium to which the WDM signal light is input, and to collectively expand a spectrum of signal light of each wavelength contained in the WDM signal light in the first nonlinear medium, and to separate a signal component and a noise component which are contained in each signal light, into different spectrum regions; a first optical filter adapted to collectively extract a signal component in a spectrum region on a shorter wavelength side of a center wavelength of each signal light for when each signal light contained in the WDM signal light has been input to the first nonlinear medium, for each signal light of which spectrum is expanded by the spectrum expanding section, and to collectively remove the signal component and the noise component in the other spectrum region; and a wavelength shifting section configured to have a second nonlinear medium to which is input the signal component of each signal light, which has been extracted by the first optical filter, and to collectively shift, to a longer wavelength side, a wavelength of the signal component of each signal light by self-frequency shifting generated in the second nonlinear medium, and to substantially match a center wavelength of each signal component with the center wavelength of each signal light for when each signal light contained in the WDM signal light has been input to the first nonlinear medium.

### EFFECTS

According to the optical waveform shaping method and the optical waveform shaping apparatus in the present invention as described above, the spectrum of signal light of each wavelength is collectively expanded by the nonlinear effect (SPM) generated in the first nonlinear medium so that the signal component and the noise component are separated into different spectrum regions, and only the shorter wavelength side signal component in the spectrum of each signal light is collectively extracted by the first optical filter. Then, the extracted signal component of each signal light is fed to the second nonlinear medium and the center wavelength of each signal component is collectively shifted to the longer wavelength side by the self-frequency shifting in the second nonlinear medium, so that the wavelength of each signal light is returned to the wavelength thereof for when each signal light contained in the WDM signal light has been input to the first nonlinear medium. As a result, the waveform of signal light of each wavelength contained in the WDM signal light can be collectively shaped, and also, it becomes possible to precisely hold the wavelength of each signal light before or after waveform shaped.

### BRIEF DESCRIPTION OF DRAWINGS

FIG. 1 is a block diagram illustrating a configuration of a first embodiment of an optical waveform shaping apparatus according to the present invention.
FIG. 2 is a diagram illustrating changes in time waveform of a signal light and optical spectrum thereof in the first embodiment.
FIG. 3 is a block diagram illustrating a further configuration example related to the first embodiment.
FIG. 4 is a block diagram illustrating a configuration of a second embodiment of the optical waveform shaping apparatus according to the present invention.
FIG. 5 is a block diagram illustrating one example of WDM optical fiber communication system using the optical waveform shaping apparatus of the present invention.
FIG. 6 is a block diagram illustrating another example of WDM optical fiber communication system using the optical waveform shaping apparatus of the present invention.

### EXPLANATION OF REFERENCE SYMBOLS

1 ... optical waveform shaping apparatus,
10, 30, 53 ... optical amplifier,
11, 31 ... nonlinear medium,
12, 32, 12', 32'... optical coupler,
13, 33, 13', 33' ... monitor circuit,
14, 34 ... control circuit,
20, 40 ... optical filter,
50 ... transmission terminal station,
51... transmission path,
53 ... reception terminal station

### EMBODIMENTS

Hereunder, there will be described best modes for implementing the present invention, with reference to accompanying drawings. The same reference numerals denote the same or equivalent parts in all drawings.

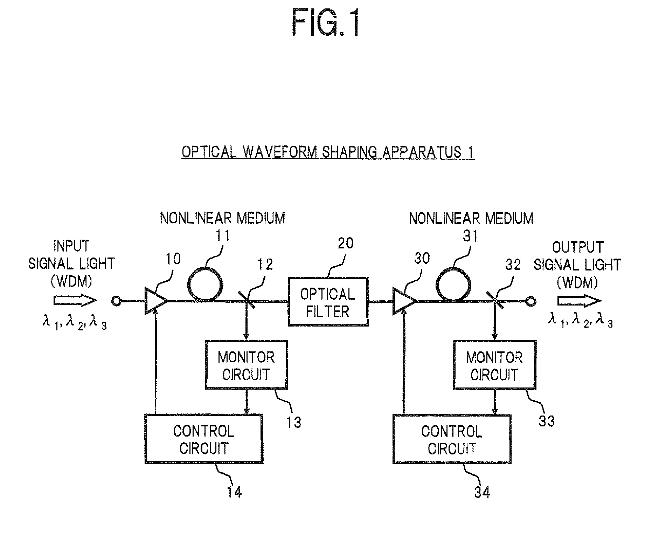

FIG. 1 is a block diagram illustrating a configuration of a first embodiment of an optical waveform shaping apparatus according to the present invention.
In FIG. 1, in an optical waveform shaping apparatus 1 in the present embodiment, a first optical amplifier 10, a first nonlinear medium 11, a first optical filter 20, a second optical amplifier 30 and a second nonlinear medium are arranged in this sequence on an optical path between an input port and an output port. Further, there are disposed: a first optical coupler 12 and a first monitor circuit 13 for monitoring a state of WDM signal light passed through the nonlinear medium 11; a second optical coupler 32 and a second monitor circuit 33 for monitoring a state of WDM signal light passed through the nonlinear medium 31; and a first control circuit 14 which controls the first optical amplifier 10 according to a monitor result of the monitor circuit 13 and a second control circuit 34 which controls the second optical amplifier 30 according to the monitor result of the monitor circuit 33.

The first optical amplifier 10 collectively amplifies the WDM signal light input to the input port to output the amplified WDM signal light to the first nonlinear medium. As a specific example of the first optical amplifier 10, there is an erbium-doped optical amplifier (EDFA), a Raman amplifier or the like. However, the first optical amplifier in the present invention is not limited to the above specific example. The WDM signal light input to the input port contains a plurality of signal lights of different wavelengths, and herein, three waves signal lights of wavelengths λ₁, λ₂, λ₃ are input to the input port. As described later, an optical output power of the first optical amplifier 10 (an optical input power to the first nonlinear medium 11) is controlled in accordance with a control signal from the first control circuit 14, so that self-phase modulation (SPM) being a nonlinear optical effect is generated in the first nonlinear medium 11 and spectrums of the signal lights of respective wavelengths λ₁ to λ₃ are expanded.

The first nonlinear medium 11 receives the signal lights of respective wavelengths λ₁ to λ₃ at one end thereof, and outputs, from the other end thereof, the signal lights of which spectrums are expanded due to the SPM. It is desirable that the nonlinear effects of same amount are generated for the signal lights of respective wavelengths λ₁ to λ₃. As a specific example of the nonlinear medium 11, there is a nonlinear optical fiber which is obtained by doping germanium (Ge) to a conventional silica-based optical fiber to enhance a nonlinear refractive index, and further by decreasing a core sectional area to enhance the optical intensity, a photonic crystal fiber in which a hollow is disposed in a core portion to minimize an effective core sectional area, or the like. However, the nonlinear medium applicable to the present invention is not limited to the above specific example. The nonlinear optical fiber or the photonic crystal fiber described above has a nonlinear optical coefficient of fixed value in a wavelength band called C-band (1530nm to 1365nm) which is widely used in optical fiber communications, but may have chromatic dispersion of different values. In order to generate the nonlinear effects of same amount for the WDM signal light in the nonlinear medium 11, it is better to use a dispersion flat fiber of which chromatic dispersion value has a fixed value relative to wavelengths. Otherwise, in order to generate the nonlinear effects of same amount, it is also possible to use the one which is designed so that the chromatic dispersion in the entire nonlinear medium is fixed although the chromatic dispersion is locally different. Further, in the present invention, it is desirable to avoid the nonlinear effect, such as four-wave mixing (FWM), among the signal lights of respective wavelengths, and for this purpose, it is preferable to use a short nonlinear medium. Otherwise, it is also possible to use a nonlinear medium, in which chromatic dispersion is locally large, including a portion having an anomalous dispersion value and a portion having a normal dispersion value, in a longitudinal direction.

The first optical coupler 12 branches a part of the WDM signal light which is output from the first nonlinear medium 11 to be sent to the optical filter 20, and outputs a branched light to the first monitor circuit 13. The first monitor circuit 13 monitors an optical spectrum of the WDM signal light branched by the optical coupler 12, and transmits the monitor result to the first control circuit 14.
The first control circuit 14 controls the optical output power of the first optical amplifier 10 according to the monitor result of the first monitor circuit 13, so that optical spectrum shapes of the signal lights of respective wavelengths λ₁ to λ₃ output from the first nonlinear medium 11 become diphasic, and also, optical spectrum components of adjacent signal light wavelengths do not overlap with each other.

The first optical filter 20 has transmission bands respectively corresponding to the signal lights of wavelengths λ₁ to λ₃. Center wavelengths of respective transmission bands are shifted by Δλ to a shorter wavelength side relative to the corresponding signal light wavelengths λ₁ to λ₃. This wavelength shift amount Δλ to the shorter wavelength side is desirable to be set at 1/4 times (Δλ=S/4) the wavelength spacing S between adjacent signal lights. Further, the width of each transmission band is set to be narrower than half of the wavelength spacing S. Each signal light which has passed through the nonlinear medium 11 and the optical spectrum of which has been made diphasic, is fed to such an optical filter 20 so that the signal component on the shorter wavelength side is extracted from each diphasic spectrum, and then, is output to the second optical amplifier 30. As a specific configuration of the optical filter 20 described above, there is a Fabry-Perot type optical filter, an arrayed waveguide grating type optical filter or the like. The Fabry-Perot type optical filter has the feature capable of coping with each signal light with a simple configuration, since the spacing between transmission center wavelengths is equal. In particular, the Fabry-Perot type optical filter using an etalon technology has the feature in that an insertion loss is small, wavelength regulation can be simply performed and the like, and accordingly, is suitable to be used as the optical filter 20. However, the optical filter applied to the present invention is not limited to the above specific example.

The second optical amplifier 30 collectively amplifies each signal light of which signal component on the shorter wavelength side is extracted by the optical filter 20, to output each amplified signal light to the second nonlinear medium 31. As the second optical amplifier 30, it is possible to use the one having a configuration same as that of the first optical amplifier 10. As described later, an optical output power of the second optical amplifier 30 (an optical input power to the second nonlinear medium 31) is controlled in accordance with a control signal from the second control circuit 34, so that soliton self-frequency shifting for shifting the wavelength of each signal by Δλ to a longer wavelength side is generated in second first nonlinear medium 31.

The second nonlinear medium 31 receives each signal light amplified by the second optical amplifier 30 at one end thereof, and outputs each signal light subjected to the soliton self-frequency shifting from the other end thereof. The soliton self-frequency shifting is a phenomenon that the wavelength of signal light which satisfies soliton conditions is shifted to the longer wavelength side in the second nonlinear medium 31, and an amount of the wavelength shifting is determined by a parameter of the second nonlinear medium 31 and a parameter of the signal light. As a specific example of the second nonlinear medium 31, there is a nonlinear fiber, a photonic crystal fiber or the like, similar to the first nonlinear medium 11. For the second nonlinear medium 31, it is also desirable to avoid the nonlinear effect, such as four-wave mixing (FWM), among each signal light, and for this purpose, it is preferable to use a short nonlinear medium or to use a nonlinear medium, in which chromatic dispersion is locally large, including a portion having an anomalous dispersion value and a portion having a normal dispersion value, in a longitudinal direction.

The second optical coupler 32 branches a part of the WDM signal light which is output from the second nonlinear medium 31 to be sent to the output port, and outputs a branched light to the second monitor circuit 33. The second monitor circuit 33 monitors an optical spectrum of the WDM signal light branched by the optical coupler 32, and transmits the monitor result to the second control circuit 34.
The second control circuit 34 controls the optical output power of the second optical amplifier 30 according to the monitor result of the second monitor circuit 33, so that peak wavelengths of respective signal lights output from the second nonlinear medium 31 are substantially matched with the wavelengths λ₁ to λ₃ of respective signal lights for when the respective signal lights contained in the WDM signal light have been input to the first nonlinear medium 11.

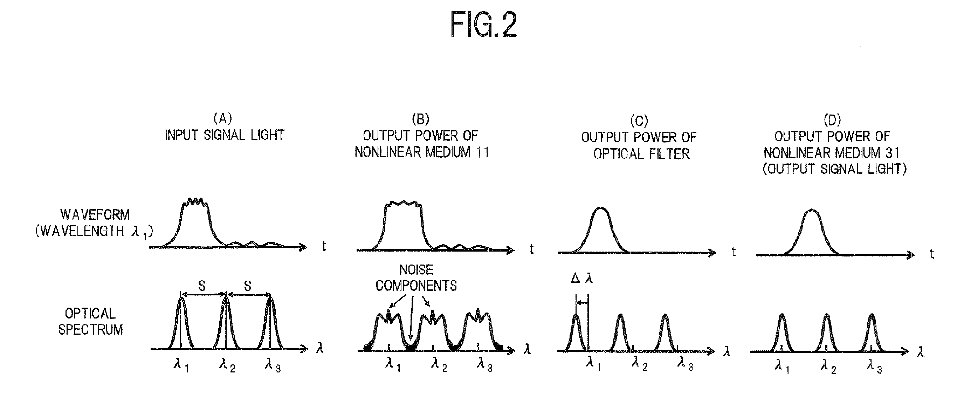

Next, there will be described an operation of the present embodiment.
In the optical waveform shaping apparatus 1 of the above configuration, when the WDM signal light as illustrated in (A) of FIG. 2 for example, is input from the input port, the WDM signal light is firstly fed to the first optical amplifier 10. In the first optical amplifier 10, powers of the signal lights of respective wavelengths λ₁ to λ₃ are collectively amplified so that the SPM is generated in the first nonlinear medium 11, and the amplified signal lights are output to the first nonlinear medium 11. Incidentally, upper stages of (A) to (D) in FIG. 2 represent time waveforms of the signal light of one wavelength (herein, the wavelength λ₁) among the signal lights of plural wavelengths contained in the WDM signal light, provided that the horizontal axis is a time t and the vertical axis is the optical intensity. Further, lower stages of (A) to (D) in FIG. 2 represent optical spectrums of the signal lights of respective wavelengths λ₁ to λ₃, provided that the horizontal axis is a wavelength λ and the vertical axis is the optical intensity.

In the first nonlinear medium 11, the spectrum of each signal light is expanded due to the generation of SPM, so that each signal light waveform is expanded. At the time, a noise component of "0" level (intensity fluctuation) has the small optical intensity and is hardly affected by the nonlinear effect, and therefore, the wavelength of the spectrum component of each signal light is not changed. As a result, as illustrated in the lower stage of FIG. 2(B), the noise components of "0" level of the signal lights of respective wavelengths λ₁ to λ₃ remain in center portions of the respective optical spectrums of the signal lights. On the other hand, a noise component of "1" level has the large optical intensity, and therefore, is affected by a large nonlinear effect, so that the spectrum components of the signal lights are largely expanded. As a result, as illustrated in the lower stage of FIG 2(B), wavelengths of the noise components of "1" level of the signal lights of respective wavelengths λ₁ to λ₃ are shifted to both end portions of the optical spectrums of the signal lights.

Here, considering that there is no noise component of "0" level or "1" level as described above, the optical spectrum components of the signal lights of respective wavelengths λ₁ to λ₃ become respectively optical spectrums of diphasic. Namely, each optical spectrum is depressed in the center portion thereof, and the spectrum components on both sides of the center portion become large. That is to say, by generating the SPM in the first nonlinear medium 11 to expand the spectrum of each of the signal lights of respective wavelengths λ₁ to λ₃, it becomes possible to separate the noise components of "0" level and "1" level to the center portion of the optical spectrum of each signal light and to the both end portions of the optical spectrum of each signal light, and to separate the signal component to a peak portion on the shorter wavelength side of the center of the optical spectrum of each signal light and to a peak portion on the longer wavelength side of the center of the optical spectrum of each signal light.

An expansion amount of the optical spectrum due to the SPM in the first nonlinear medium 11 described above depends on the power of each signal light output from the first optical amplifier 10. Therefore, in the present embodiment, the spectrum of each signal light output from the first nonlinear medium 11 is monitored by using the first optical coupler 12 and the first monitor circuit 13, and the first optical amplifier 10 is feedback controlled by the first control circuit 14 according to the monitor result. To be specific, in the first control circuit 14, an amplification operation of the first optical amplifier 10 is controlled so that the optical spectrum shape of each signal light monitored by the first monitor circuit 13 becomes diphasic, and also, the optical spectrum components of adjacent signal light wavelengths do not overlap with each other, and thus, the optical output power of the first optical amplifier 10 is optimized. As a condition that the optical spectrum components of the adjacent signal light wavelengths do not overlap with each other, a state where the shift amount Δλ of the peak wavelength on the shorter wavelength side (or the peak wavelength on the longer wavelength side) of the diphasic spectrum relative to the center wavelengths Δλ₁ to Δλ₃ of the respective signal lights before the SPM generation is 1/4 times (Δλ=S/4) the wavelength spacing S between the adjacent signal lights, is most preferable.

Incidentally, as described in the above, it is desirable that the nonlinear effects (SPM) of same amount are generated for the signal lights of respective wavelengths λ₁ to λ₃ in the first nonlinear medium 11. For this purpose, the nonlinear optical coefficient of the first nonlinear medium 11 and the value of chromatic dispersion thereof may be made to be substantially fixed in the signal light wavelength band, and also, for the first optical amplifier 10, output wavelength characteristics in the signal light wavelength band may be made flat by utilizing a gain equalizer or the like. Further, in the case where wavelength dependence occurs in the nonlinear optical coefficient of the first nonlinear medium 11 or in the chromatic dispersion value thereof due to the restriction of practically usable optical fiber or the like, the output characteristics of the first optical amplifier 10 may have wavelength dependence so as to deny the wavelength dependence in the nonlinear optical coefficient or in the chromatic dispersion value.

Each signal light output from the first nonlinear medium 11 is next input to the optical filter 20. In the optical filter 20, for each signal light, the shorter wavelength side component is extracted from the diphasic spectrum component (signal component) from which the noise components of "0" level and "1" level are separated. As a result, as illustrated in (C) of FIG. 2, the signal lights output from the optical filter 20 are respectively shifted to the shorter wavelength side by Δλ relative to the signal light wavelengths λ₁ to λ₃ for when the respective signal light contained in the WDM signal light have been input to the first nonlinear medium 11.

As described in the above, in view of the design of optical fiber communication system, in the optical waveform shaping apparatus, it is strongly demanded that the signal light wavelength is not changed after the processing of the signal light. Therefore, in the present invention, each output light from the optical filter 20 is sequentially fed to the second optical amplifier 30 and the second nonlinear medium 31, so that the wavelength of each signal light is shifted to the longer wavelength side by Δλ.
To be specific, in the second optical amplifier 30, each signal light output from the optical filter 20 is collectively amplified so as to have the power at which the soliton self-frequency shifting is generated in the second nonlinear medium 31, and each amplified signal light is fed to the second nonlinear medium 31. Incidentally, each signal light may be fed to a dispersion medium (not shown in the figure) before being input to the second nonlinear medium 31, to thereby perform chirping compensation of each signal light.

In the second nonlinear medium 31, the wavelength of each signal light which satisfies the soliton conditions is shifted to the longer wavelength side. As described in the above, the wavelength shift amount to the longer wavelength side due to the soliton self-frequency shifting is determined by the parameter of the second nonlinear medium 31 and the parameter of the signal light. Therefore, in the present embodiment, the optical spectrum of each signal light output from the second nonlinear medium 31 is monitored by utilizing the second optical coupler 32 and the second monitor circuit 33, and the second optical amplifier 30 is feedback controlled by the second control circuit 34 according to the monitor result. To be specific, in the second control circuit 34, an amplification operation of the second optical amplifier 30 is controlled so that the peak wavelengths of the respective signal lights monitored by the second monitor circuit 13 are substantially matched with the original wavelengths λ₁ to λ₃, and thus, the optical output power of the second optical amplifier 30 is optimized. A control speed by the second control circuit 34 can be relatively low, since the parameter of the second nonlinear medium 30 is not dynamically and largely changed.

Incidentally, the wavelength shift amount to the longer wavelength side in the second nonlinear medium 31 needs to be substantially the same value for each signal light. For this purpose, as the second optical amplifier 30, it is preferable to use the one of which output power has not wavelength dependence. Such an optical amplifier can be realized by an EDFA utilizing a gain equalizer or the like. Further, by applying the above described nonlinear fiber, photonic crystal fiber or the like as the second nonlinear medium 31, the wavelength shift amount of same value for each signal light can be realized.

Thus, each signal light of which wavelength is returned, in the second nonlinear medium 31, to the wavelength for when each signal light contained in the WDM signal light has been input to the first nonlinear medium 11, satisfies the soliton conditions, and therefore, becomes the high quality signal without chirping. Consequently, as illustrated in FIG. 2(D), the signal lights of wavelengths λ₁ to λ₃ without chirping from which the noise components of "0" level and "1" level are removed, are output from the output port.
As described above, according to the optical waveform shaping apparatus 1 in the present embodiment, the waveforms of the signal lights of respective wavelengths contained in the WDM signal light can be collectively shaped, and also, it becomes possible to precisely hold the wavelengths of the respective signal lights before or after waveform shaped.

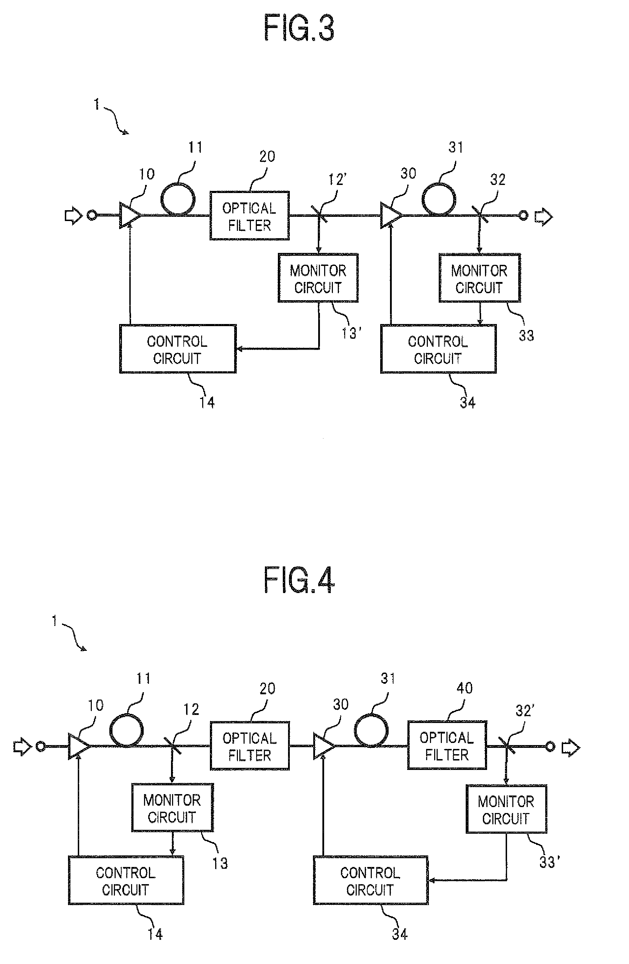

Incidentally, in the above first embodiment, there has been described the configuration example in which the first optical coupler 12 is disposed between the first nonlinear medium 11 and the optical filter 20 so that the optical spectrum of each signal light output from the first nonlinear medium 11 is monitored by the first monitor circuit 13. However, as illustrated in FIG. 3 for example, a first optical coupler 12' may be arranged between the optical filter 20 and the second optical amplifier 30 to thereby monitor the signal light transmitted through the optical filter 20. In this case, since a power of signal light branched by the optical coupler 12' may be monitored by a first monitor circuit 13' and the first optical amplifier 10 may be feedback controlled by the first control circuit 14 so that the power of the signal light monitored by the first monitor circuit 13' becomes maximum, it is possible to simplify the monitor circuit.

Next, there will be described a second embodiment of the optical waveform shaping apparatus according to the present invention.
FIG. 4 is a block diagram illustrating a configuration of the optical waveform shaping apparatus in the second embodiment.
In FIG. 4, a configuration of the optical waveform shaping apparatus 11 in the present embodiment differs from the configuration in the first embodiment illustrated in FIG. 1 in that a second optical filter 40 is inserted on an optical path between the second nonlinear medium 31 and the output port, and also, each signal light transmitted through the optical filter 40 is branched by a second optical coupler 32' to thereby monitor the power of each signal light by a second monitor circuit 33'. Incidentally, the configuration of the second embodiment other than the above is same as that of the first embodiment, and accordingly, the description thereof is omitted here.

The second optical filter 40 has transmission bands of which center wavelengths are respectively matched with the respective signal light wavelengths λ₁ to λ₃, and the width of each transmission band is set to be narrower than half of the wavelength spacing S between each signal light, similarly to the first optical filter 20. As a specific configuration of the second optical filter 40, there is a Fabry-Perot type optical filter, an arrayed waveguide grating type optical filter or the like, similarly to the first optical filter 20.

In the optical waveform shaping apparatus 1 of the above configuration, similarly to the above described first embodiment, the optical spectrum of each signal light is expanded due to the SPM in the first nonlinear medium 11, and thereafter, the shorter wavelength side component of the diphasic spectrum is extracted by the first optical filter 20. Further, the output lights from the first optical filter 20 are collectively amplified by the second amplifier 30 to be fed to the second nonlinear medium 31, and then, the wavelengths of the respective signal lights are returned to λ₁ to λ₃. At the time, if a light which does not satisfy the soliton conditions is contained in the signal lights to be fed to the second nonlinear medium 31, this light does not perform the wavelength shifting to the longer wavelength side, and therefore, becomes a new noise component. Therefore, in the present embodiment, the second optical filter 40 is disposed on the output side of the second nonlinear medium 31, so that the non-soliton component which has not performed the wavelength shifting to the longer wavelength side is removed by the second optical filter 40 whereas the soliton component which has performed the wavelength shifting to the longer wavelength side is transmitted through the second optical filter 40. Further, herein, the power of each signal light transmitted through the second optical filter 40 is monitored by the second optical coupler 32' and the second monitor circuit 33', and the second optical amplifier 30 is feedback controlled by the second control circuit 34 so that the monitored power becomes maximum.

As described above, according to the optical waveform shaping apparatus 1 in the second embodiment, in addition to the effects of the above first embodiment, by disposing the second optical filter 40 on the latter stage of the second nonlinear medium 31, it becomes possible to collectively waveform shape, with higher precision, the signal lights of wavelengths λ₁ to λ₃ contained in the WDM signal light. Further, since the power of each signal light transmitted through the second optical filter 40 is monitored, the monitor circuit can be simplified.

Incidentally, in the second embodiment, differently from the configuration of the first embodiment illustrated in FIG. 1, the second optical filter 40 is disposed on the latter stage of the second nonlinear medium 31. However, a configuration similar to the above can be applied to a configuration illustrated in FIG. 3, that is, a configuration in which the power of each signal light transmitted through the first optical filter 20 is monitored to thereby feedback control the first optical amplifier 10.

Next, there will be described an application example of the optical waveform shaping apparatus in each embodiment described above to a WDM optical fiber communication system.

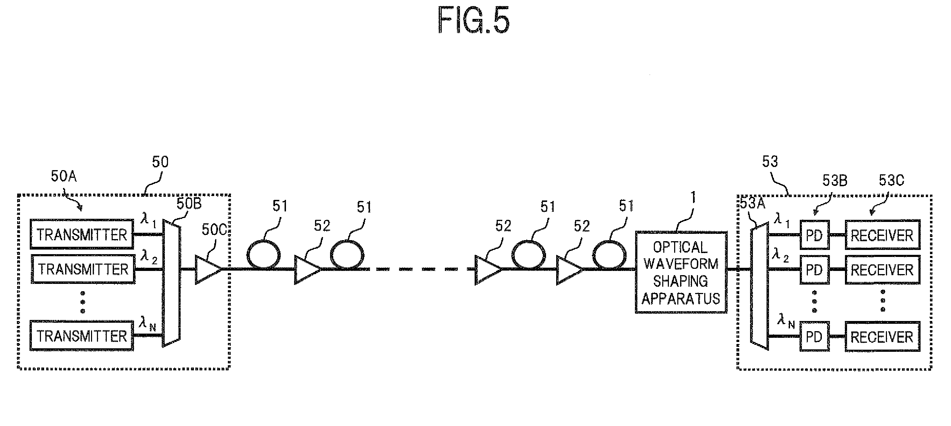

FIG. 5 is a block diagram illustrating one example of WDM optical fiber communication system using the optical waveform shaping apparatus according to the present invention.
In the WDM optical fiber communication system illustrated in FIG. 5, signal lights of different wavelengths λ₁ to λ₃ output from transmitters 50A of N numbers disposed in a transmission terminal station 50 are wavelength division multiplexed by a multiplexer 50B and are amplified up to required levels by a post-amplifier 50C, to be sent to a transmission path 51. On the transmission path 51, optical amplifiers 52 are arranged at required intervals, and the WDM signal light transmitted to the transmission path 51 is repeating-transmitted toward a reception terminal station 53. Herein, the optical waveform shaping apparatus 1 according to the present invention as illustrated in each embodiment described above is disposed on an input end of the reception terminal station 53, and in the optical waveform shaping apparatus 1, the WDM signal light to be received by the reception terminal station 53 is collectively waveform shaped. In the reception terminal station 53, the WDM signal light output from the optical waveform shaping apparatus 1 is demultiplexed for each wavelength by a demultiplexer 53A. Thereafter, the signal lights of wavelengths λ₁ to λ₃ are photo-electrically converted by photo-detectors (PD) 53B and respective electric signals are reception processed by receivers 53C.

According to the above described WDM optical fiber communication system, by collectively waveform shaping the WDM signal light by the optical waveform shaping apparatus 1, it becomes possible to suppress the noise occurred in the signal light of each wavelength during the repeating-transmission of the WDM signal light by the transmission path 51 and the optical amplifiers 52, and therefore, reception sensitivity in each receiver 53C in the reception terminal station 53 is improved and the WDM communication of high reliability can be realized. Further, by the waveform shaping of the WDM signal light by the optical waveform shaping apparatus 1, it becomes also possible to extend a distance capable of transmitting the WDM signal light.

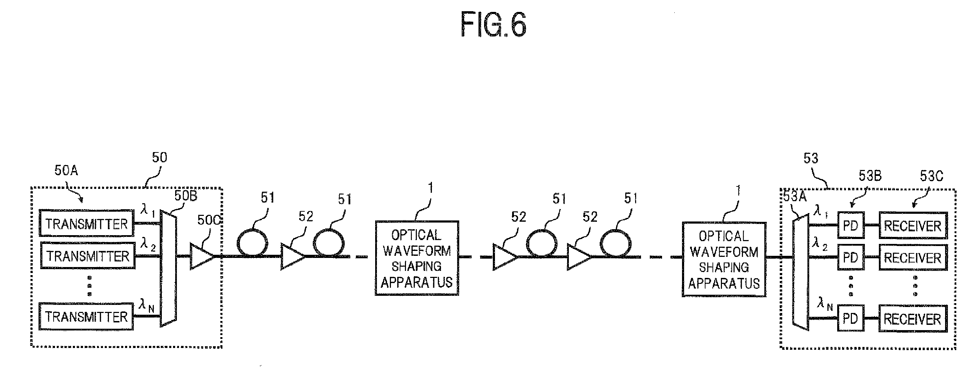

Incidentally, in the above WDM optical fiber communication system, there has been described the configuration example in which the optical waveform shaping apparatus 1 of the present invention is arranged on the input end of the reception terminal station 53. However, as illustrated in FIG. 6 for example, it is also possible to arrange the optical waveform shaping apparatuses 1 of the present invention, as repeaters, on the way of the transmission path 51. In such a system configuration, the WDM signal light is repeating-transmitted while repetitively performing the waveform shaping by the optical waveform shaping apparatus 1 at required intervals. Therefore, it is possible to effectively suppress the noise occurred during the transmission, and also, it becomes possible to further extend the transmission distance of the WDM signal light.

## Claims

1. An optical waveform shaping method of collectively waveform shaping a plurality of signal lights of different wavelengths contained in a WDM signal light, comprising:
a spectrum expanding process of inputting the WDM signal light to a first nonlinear medium to collectively expand a spectrum of the signal light of each wavelength, and separating a signal component and a noise component which are contained in each signal light, into different spectrum regions;
an optical filtering process of collectively extracting a signal component in a spectrum region on a shorter wavelength side of a center wavelength of each signal light for when each signal light contained in the WDM signal light has been input to the first nonlinear medium, for each signal light of which spectrum has been expanded in the spectrum expanding process, and collectively removing the signal component and the noise component in the other spectrum region; and
a wavelength shifting process of inputting the signal component of each signal light, which has been extracted in the optical filtering process, to a second nonlinear medium, collectively shifting, to a longer wavelength side, a wavelength of the signal component of each signal light by self-frequency shifting generated in the second nonlinear medium, and substantially matching a center wavelength of each signal component with the center wavelength of each signal light for when each signal light contained in the WDM signal light has been input to the first nonlinear medium.

2. An optical waveform shaping apparatus for collectively waveform shaping a plurality of signal lights of different wavelengths contained in a WDM signal light, comprising:
a spectrum expanding section configured to have a first nonlinear medium to which the WDM signal light is input, and to collectively expand a spectrum of the signal light of each wavelength contained in the WDM signal light in the first nonlinear medium, and to separate a signal component and a noise component which are contained in each signal light, into different spectrum regions;
a first optical filter adapted to collectively extract a signal component in a spectrum region on a shorter wavelength side of a center wavelength of each signal light for when each signal light contained in the WDM signal light has been input to the first nonlinear medium, for each signal light of which spectrum has been expanded by the spectrum expanding section, and to collectively remove the signal component and the noise component in the other spectrum region; and
a wavelength shifting section configured to have a second nonlinear medium to which is input the signal component of each signal light, which has been extracted by the first optical filter, and to collectively shift a wavelength of the signal component of each signal light by self-frequency shifting generated in the second nonlinear medium, and to substantially match a center wavelength of each signal component with the center wavelength of each signal light for when each signal light contained in the WDM signal light has been input to the first nonlinear medium.

3. The optical waveform shaping apparatus according to claim 2,
wherein the spectrum expanding section includes: a first optical amplifier adapted to collectively amplify the WDM signal light input to the first nonlinear medium; a first monitor circuit adapted to monitor the spectrum of the signal light of each wavelength output from the first nonlinear medium; and a first control circuit adapted to feedback control an output power of the first optical amplifier based on a monitor result of the first monitor circuit, so that the signal component and the noise component contained in the signal light of each wavelength are separated into different spectrum regions by the spectrum expansion in the first nonlinear medium.

4. The optical waveform shaping apparatus according to claim 2,
wherein the spectrum expanding section includes: a first optical amplifier adapted to collectively amplify the WDM signal light input to the first nonlinear medium; a first monitor circuit adapted to monitor a power of the signal light of each wavelength output from the first optical filter; and a first control circuit adapted to feedback control an output power of the first optical amplifier, so that a power of the signal light of each wavelength, which is to be monitored by the first monitor circuit, becomes maximum.

5. The optical waveform shaping apparatus according to claim 2,
wherein the wavelength shifting section includes: a second optical amplifier adapted to collectively amplify a shorter wavelength side signal component of each signal light input to the second nonlinear medium; a second monitor circuit adapted to monitor the spectrum of each signal light output from the second nonlinear medium; and a second control circuit adapted to feedback control an output power of the second optical amplifier based on a monitor result of the second monitor circuit, so that the center wavelength of each signal light which has been wavelength shifted to a longer wavelength side in the second nonlinear medium is substantially matched with that for when each signal light contained in the WDM signal light has been input to the first nonlinear medium.

6. The optical waveform shaping apparatus according to claim 2,
wherein the wavelength shifting section includes: a second optical amplifier adapted to collectively amplify a shorter wavelength side signal component of each signal light input to the second nonlinear medium; a second optical filter having transmission center wavelengths each of which is substantially matched with the center wavelength of each signal light for when each signal light contained in the WDM signal light has been input to the first nonlinear medium, adapted to receive each signal light output from the second nonlinear medium; a second monitor circuit adapted to monitor a power of each signal light output from the second optical filter; and a second control circuit adapted to feedback control an output power of the second optical amplifier, so that the power of the signal light of each wavelength, which is to be monitored by the second monitor circuit, becomes maximum.

7. The optical waveform shaping apparatus according to claim 2,
wherein the first and second nonlinear mediums are silica-based optical fibers each having a structure in which a nonlinear coefficient is increased by doping a material or narrowing a core portion.

8. The optical waveform shaping apparatus according to claim 2,
wherein the first and second nonlinear mediums are photonic crystal fibers each having a structure in which a nonlinear effect is increased by disposing a hollow in a core portion to narrow the core portion.

9. The optical waveform shaping apparatus according to claim 2,
wherein the first and second nonlinear mediums each has a substantially fixed value of chromatic dispersion in a wavelength band of the WDM signal light.

10. The optical waveform shaping apparatus according to claim 2,
wherein the first and second nonlinear mediums each is locally provided with a portion in which a value of chromatic dispersion is relatively large in a longitudinal direction.

11. The optical waveform shaping apparatus according to claim 2,
wherein the first optical filter has a plurality of transmission bands each corresponding to each signal light contained in the WDM signal light, and intervals between center wavelengths of the respective transmission bands are equal to each other.

12. The optical waveform shaping apparatus according to claim 11,
wherein the first optical filter is a Fabry-Perot type optical filter.

13. The optical waveform shaping apparatus according to claim 2,
wherein the first and second nonlinear mediums each receives signal lights of equal powers.

14. The optical waveform shaping apparatus according to claim 2,
wherein the first and second nonlinear mediums each receives signal lights of which powers are different from each other so that wavelength dependence of a nonlinear effect is denied.

15. A WDM optical fiber communication system comprising an optical waveform shaping apparatus recited in claim 2.

16. The WDM optical fiber communication system according to claim 15,
wherein the optical waveform shaping apparatus is arranged on an input end of a reception terminal station.

17. The WDM optical fiber communication system according to claim 16,
wherein the optical waveform shaping apparatus is also arranged on the way of a transmission path.

18. An optical waveform shaping method comprising:
an expanding process of inputting a plurality of signal lights of different wavelengths to a first nonlinear medium to expand spectrums of the signal lights;
a filtering process of extracting a signal component which does not contain a noise component from a spectrum region on a shorter wavelength side of a center wavelength of each signal light of which spectrum has been expanded in the expanding process; and
a process of shifting a wavelength of the signal component of each signal light extracted in the filtering process to a longer wavelength side due to self-frequency shifting generated in a second nonlinear medium, and substantially matching a center wavelength of the signal component of each signal light with the center wavelength of each signal light for when each signal light has been input to the first nonlinear medium.
